# EUROPÄISCHE PATENTSCHRIFT

(11) **EP 1 113 059 B1**
(45) Veröffentlichungstag und Bekanntmachung des Hinweises auf die Patenterteilung: **13.08.2003**
(21) Anmeldenummer: 00127134.5
(22) Anmeldetag: 12.12.2000
(51) Int. Cl.: C09J 7/02, B65D 33/34, B65D 55/02, G09F 3/02

(54) **Sicherheitsklebeband zum Nachweis des unbefugten Öffnens einer Verpackung**
Tamper-evident packaging tape
Ruban adhésif inviolable pour emballage

(30) Priorität: 29.12.1999 DE 19963709
(43) Veröffentlichungstag der Anmeldung: 04.07.2001
(73) Patentinhaber: Tesa AG, 20253 Hamburg (DE)
(72) Erfinder: Otten, Ulrich, 22549 Hamburg (DE); Wenninger, Dieter, Dr., 22765 Hamburg (DE); Röber, Stefan, Dr., 22453 Hamburg (DE)

(56) Entgegenhaltungen:
- EP-A- 0 651 365
- WO-A-97/44769
- WO-A-99/55791
- US-A- 5 658 411

## Beschreibung

Die Erfindung bezieht sich auf ein mehrschichtiges Klebeband mit einem Träger auf Basis einer gereckten Thermoplastfolie, die einseitig mit Klebemasse beschichtet ist. Das Klebeband zeigt das unautorisierte Öffnen einer Verpackung an, indem Bereiche des Klebebands beim Abschälen von der beklebten Oberfläche aus dem Klebeband herausgelöst werden und als Botschaft auf der Oberfläche verbleiben, wobei die Botschaft vor dem Ablösen von der Oberfläche nicht erkennbar ist. Die Botschaft bleibt erkennbar, auch wenn das Klebeband nach dem Ablösen wieder exakt an der ursprünglichen Verklebungsstelle angelegt wird.

Der Schutz von Waren, die sich in der logistischen Kette vom Produzenten zum Verwender befinden, ist durch die Vielzahl der Glieder in dieser Kette schwieriger geworden. So ist der Schaden, der durch Diebstahl der Ware aus ihrer Versandverpackung während des Lagerns und des Transports passiert, zu einem bedeutenden Kostenfaktor angestiegen. Der Empfänger einer Versandeinheit, in der ein Teil der Ware durch Diebstahl entnommen oder ausgetauscht wurde, hat zudem Schwierigkeiten zu beweisen, daß diese Manipulation nicht in seinem eigenen Einflußbereich vorgenommen wurde.

Eine bedeutend höhere Sicherheit gegen den Versuch eines Diebstahls und ein sicherer Nachweis, daß eine Versandeinheit vor Übernahme in den nächsten Abschnitt der logistischen Kette geöffnet wurde, ermöglicht ein Klebeband, das durch eine irreversible Botschaft anzeigt, daß es schon einmal von der Oberfläche der Versandeinheit abgelöst wurde.

Sicherheitssysteme zum Nachweis des unbefugten Öffnens sind bekannt und in einer Vielzahl im Stand der Technik beschrieben. Hierbei sind besonders Sicherheitsetiketten von großer Bedeutung. So werden zum Beispiel in US 4,184,701 Sicherheitsetiketten beschrieben, die aus mehreren Farb- beziehungsweise allgemein Schichten aufgebaut sind und dadurch eine geringe Haftung der Produktschichten untereinander aufweisen. In Kombination mit einer stark haftenden Klebemasse trennen sich derartige Schichten irreversibel voneinander, wodurch die Öffnung der Verpackung angezeigt wird.
Weiterhin wird beispielsweise in DE 34 31 239 A1 die Verwendung von Sicherheitsetiketten beschrieben, bestehend aus einem Trägermaterial mit geringer Weiterreißfestigkeit. In Kombination mit einer stark haftenden Klebemasse wird das Sicherheitsetikett beim Entfernen irreversibel zerstört und somit der Öffnungsversuch angezeigt.
Das Sicherheitsetikett weist eine untere, von einem Träger abzulösende und auf die Verpackung aufzubringende erste Klebstoffschicht auf der Unterseite eines ersten Etikettenmaterials auf, auf dessen Oberseite über eine zweite Klebstoffschicht ein zweites Etikettenmaterial aufgebracht ist. Die Stärke der Klebkraft der ersten Klebstoffschicht zwischen der Verpackung und dem ersten Etikettenmaterial ist verschieden von der Stärke der Klebkraft der zweiten Klebstoffschicht zwischen dem ersten Etikettenmaterial und dem zweiten Etikettenmaterial.

Sicherheitsklebebänder werden gewöhnlich so ausgeführt, daß im Bereich des Schriftzugs eine Verankerungsschwäche unterhalb des farbigen Aufbaus des Klebebandes eingeführt wird. So wird in US 5,633,058 ein schwach auf der Trägerfolie verankernder transparenter Buchstabendruck beschrieben, der mit einer vollflächigen farbigen, gut auf der Trägerfolie und dem ersten Druck verankernden Schicht überdeckt wird. Die farbige Schicht ist mit einer Selbstklebemasse abgedeckt. Wird ein derartiges Sicherheitsklebeband von einer Oberfläche abgeschält, löst sich der transparente Buchstabendruck zusammen mit der Farbschicht und der Klebemasse von der Folienoberfläche und verbleibt als Schriftzug auf der Oberfläche zurück.

EP 0 491 099 A1 beschreibt einen Buchstabendruck bestehend aus einem Silikonmaterial, das ebenfalls mit einer farbigen gut auf der Folie haftenden Schicht abgedeckt ist. Die farbige Schicht ist mit einer Selbstklebemasse abgedeckt. Wird ein derartiges Sicherheitsklebeband von einer Oberfläche abgeschält, lösen sich die Farbschicht und die Klebemasse von der Silikonoberfläche und verbleiben als Schriftzug auf der Oberfläche zurück.

Der Nachteil eines derartigen Aufbaus ist die aufwendige Verfahrenstechnik, um die Schichten zu erstellen, da partielle Silikonoberflächen eine weitere Beschichtung aufgrund der geringen Oberflächenspannung stark erschweren.

In US 4,121,003 wird beschrieben, daß das Übertragen eines Schriftzuges dadurch erreicht wird, daß dieser Schriftzug aus einem wenig kohäsiven Material besteht, das beim Ablösen des Sicherheitsklebebandes in sich spaltet und zum Teil auf der beklebten Oberfläche zurückbleibt.

EP 0 404 402 A2 basiert auf einer transparenten spaltbaren Schicht, die an der sich bildenden Grenzfläche opak wird und damit einem vorher nicht erkennbaren Schriftzug eine optische Kontrastfläche bietet, vor der der Schriftzug dann lesbar wird.

Ein Nachteil derartiger Aufbauten ist zudem, daß die Oberfläche von Versandeinheiten, die aus wenig spaltfestem Material wie zum Beispiel Papier bestehen, leicht durch das Klebeband aufgerissen werden. Dabei reißt die abgespaltene Oberfläche der Versandeinheit vollflächig unter dem Klebeband auf und haftet deckend auf der Oberfläche der Klebemasse. Der Schriftzug ist dann nicht auf die Kartonoberfläche übertragen worden und die vorgesehene Botschaft ist nicht erschienen.

Diesem nachteiligen Umstand tragen viele erhältliche Klebebänder dieses Typs dadurch Rechnung, daß sie eine schwach klebende Klebemasse besitzen, die sich ohne Aufreißen der Papieroberfläche abschälen lassen. Der Nachteil dieser Lösung ist jedoch eine nicht ausreichende Verklebungssicherheit auf den unterschiedlichen Arten von Papiermaterialien insbesondere Sorten mit hohem Altpapieranteil, so daß sich der U-förmige Verschluß einer Versandschachtel mit diesen Klebebändern unter dem Druck der Deckelklappen wieder löst und sich die Schachtel selbsttätig öffnet.

Ein wichtiger Anspruch an die Sicherheit gegen Manipulation ist die schnell und leicht sichtbare Individualität des Klebebandverschlusses. Normale Verpackungsklebebänder werden deshalb mit dem individuellen Firmenlogo auf der Trägerrückseite bedruckt, so daß ein Austausch oder ein Überkleben mit einem anderen Klebeband leicht erkannt werden kann. Die mögliche Druckauflage derartig gekennzeichneter Klebebänder ist im Minimum eine einzige Rolle, so daß eine hohe Individualität der Lieferung der Verpackungen, die mit diesem Klebeband verschlossen werden, erzielt werden kann.

Eine Kombination der beiden Sicherheitseffekte - "Botschaft übertragen" und "Individuelle Bedruckung" - ist bisher noch nicht zufriedenstellend gelungen. Die nachträgliche Bedruckung auf der Trägerrückseite der bisherigen Klebebänder ist aufgrund des notwendigen Silikonreleases auf dieser Oberfläche mit den üblichen Druckverfahren nicht möglich. Bei den bisherigen Ausführungen eines derartigen Klebebandes wird daher die Trägerfolie vor dem Ausrüsten mit den für den Effekt "Übertragen einer Botschaft" notwendigen Schichten bedruckt. Dieses hat zur Folge, daß nur große Auflagen an Klebebändem mit einem individuellen Druck wirtschaftlich herstellbar sind.

Erhältliche Ausführungen eines Sicherheitsklebebandes im beschriebenen Sinne werden ersatzweise mit einer fortlaufenden Nummer bedruckt, um eine Individualisierung zu erreichen. Diese Methode erfordert jedoch einen hohen Aufwand an Informationsaustausch innerhalb der logistischen Kette. Zusätzlich ist ein aufwendiges Kontrollieren jeder Versandeinheit auf Übereinstimmung mit dem vom Produzenten angekündigten Nummernkreis erforderlich.

Die technische Ausführung eines solchen Sicherheitsklebebandes ist sehr kostenintensiv im Material und im Herstellverfahren. So werden bisher Trägerfolien eingesetzt, die aus teuren Materialien wie Polyester und Polystyrol bestehen. Folien auf Basis von Polystyrol sind aber spröde und widerstehen nicht den Stoß- und Fallbelastungen, die beim Transport und bei der Lagerung von mit Verpackungsklebebändern verschlossenen Verpackungen auftreten.

Thermoplastfolien auf Basis von Polyethylentherephthalat (PET) oder Polyvinylchlond (PVC) werden zur Herstellung von Klebebändern von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus.
Weiterhin besitzen Folien auf Basis von Polyestern eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Folien auf Basis von PVC werden in Kombination mit lösemittelhaltigen Klebemassen auf Basis von Naturkautschuk von verschiedenen Herstellern als Verpackungsklebebänder angeboten. Hierbei werden aufgrund der besseren Wärmebeständigkeit Folien aus Hart-PVC verwendet, die bis max. 105 °C eine gute Wärmebeständigkeit aufweisen.
Die Gewinnung des PVC kann hierbei durch Emulsions-, Suspensions- oder Massepolymerisation erfolgen. Auch Copolymere auf Basis PVC/Vinylacetat sind bekannt.

Weiterhin zeichnen sich die Folien auf der Basis von Hart-PVC durch mittlere Durchschlagskraft und eine teilweise Resistenz gegenüber Benzin, Öl und Alkohole aus. Im allgemeinen ist die Verankerung von Primern auf PVC-Folien ohne Coronabehandlung besser als bei anderen Thermoplastfolien, wie beispielsweise Folien auf Basis von Polyolefinen. Dies beruht auf der hohen Oberflächenenergie auch ohne Vorbehandlung [ca. 39 dyn/cm] und auf der rauhen Oberflächenstruktur von PVC Folien. Für eine ausreichende Verankerung von Klebemassen auf Basis von Naturkautschuk ist eine mit Primer beschichtete PVC-Folie zu empfehlen.

Bei der Herstellung von Klebebändem mit Klebemassen auf Basis von Naturkautschuk werden sowohl wasserbasierende als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vernetzende Wirkung.

Aufgabe der vorliegenden Erfindung ist es, ein Sicherheitsklebeband zu schaffen, das beim Entfernen von der Oberfläche einer Verpackung einen insbesondere farbigen Schriftzug auf einer insbesondere andersfarbigen Schicht hinterläßt, wobei letztere mit der gesamten Klebmasse auf der Verpackungsoberfläche fixiert bleibt. Gleichzeitig ist der identische Schriftzug invers auf dem abgezogen Folienträger sichtbar.

Gelöst wird diese Aufgabe durch ein Klebeband, wie es im Hauptanspruch dargelegt ist. Gegenstand der Unteransprüche sind vorteilhafte Fortbildungen des Erfindungsgegenstandes. Des weiteren betrifft die Erfindung Verwendungsvorschläge des erfindungsgemäßen Klebebandes.

Demgemäß betrifft die Erfindung ein mehrschichtiges Klebeband mit einem Träger auf Basis einer gereckten Thermoplastfolie, dessen obere Seite gegebenenfalls mit einer Trennlackierung beschichtet ist und auf dessen untere Seite folgende Schichten aufgebracht sind:
- eine nicht vollflächig aufgetragene Primerschicht, wobei die Primerschicht sehr gut auf der Thermoplastfolie verankert,
- eine erste vollflächig über die aufgetragene Primerschicht und die freie Thermoplastfolienoberfläche aufgetragene Trennschicht, wobei die erste Trennschicht besser auf der Primerschicht verankert als auf der Thermoplastfolie,
- eine zweite vollflächig auf die erste Trennschicht aufgetragene Trennschicht, wobei die zweite Trennschicht besser auf der ersten Trennschicht haftet als die erste Trennschicht auf der Folienoberfläche und wobei die zweite Trennschicht schlechter auf der ersten Trennschicht haftet als Klebemasse auf dem Haftgrund,
- eine vollflächig auf die zweite Trennschicht aufgetragene Haftklebemasse, die auf der zweiten Trennschicht besser verankert ist als die zweite Trennschicht auf der ersten Trennschicht.

Beim Entfernen des erfindungsgemäßen Klebebands von der Oberfläche einer Verpackung hinterläßt dieses einen insbesondere farbigen Schriftzug auf einer insbesondere andersfarbigen Farb- beziehungsweise allgemein Schicht auf der Verpackung, indem sich die erste insbesondere farbige Trennschicht, die mittels Primer partiell auf der Trägeroberfläche gut verankert wird, von der zweiten insbesondere andersfarbigen Trennschicht irreversibel abtrennt. Bereiche der ersten Trennschicht, die nicht mittels Primer auf dem Träger verankert sind und sich somit direkt auf der Trägeroberfläche befinden, werden mit der zweiten Trennschicht von der Trägeroberfläche abgelöst. Die vollflächige zweite Trennschicht und die partiell herausgelöste erste Trennschicht verbleiben zusammen mit der gesamten Klebmasse auf der Verpackungsoberfläche. Der Bereich der ersten Trennschicht, der gegen die Folienoberfläche mit der Primerschicht stark verankert wurde, verbleibt auf der Trägeroberfläche.

Durch eine geeignete Abstufung der Trennkräfte des mehrschichtigen Aufbaus wird die sichere Trennung innerhalb des Klebebandes erreicht und das Aufspalten der Verpackungsoberfläche insbesondere bei Kartonagen durch die Klebemasse vollständig vermieden. Der Schriftzug ist insbesondere auf alle handelsüblichen Papierqualitäten für Kartons sicher übertragbar.

Die Botschaft ist vor dem Ablösen des Klebebands von der Oberfläche nicht erkennbar. Nach dem Ablösen bleibt die Botschaft erkennbar, auch wenn das Klebeband wieder exakt an der ursprünglichen Verklebungsstelle angelegt wird, so daß der Nachweis einer Manipulationen quantitativer oder qualitativer Art am verpackten Produkt erkennbar bleibt.

Das Sicherheitsklebeband gewährleistet, daß die Botschaft sicher auf
a) festen schwer spaltbaren Oberflächen,
b) auf wenig spaltfesten Oberflächen und
c) auf Oberflächen mit antiadhäsiven Eigenschaften übertragen wird, wie sie bei handelsüblichen Papierqualitäten aus Altpapier üblich sind.

Ferner ist das erfindungsgemäße Sicherheitsklebeband so ausgeführt, daß eine ökonomische individuelle Bedruckung für minimal eine Rolle möglich ist.

In einer ersten vorteilhaften Ausführungsform des Klebebands besteht die Thermoplastfolie aus gerecktem HDPE, PVC, PET, aus monoaxial gerecktem Polypropylen oder aus biaxial gerecktem Polypropylen und ist insbesondere transparent.

Folien auf Polyesterbasis, zum Beispiel eben Polyethylenterephthalat, können ebenso zur Herstellung der erfindungsgemäßen Klebebänder eingesetzt werden.
Die Dicken der Folien auf Basis von PET liegen zwischen 20 und 100 µm, insbesondere zwischen 30 und 50 µm.

Folien auf Basis von gereckten Polyolefinen gehören zum Stand der Technik. Monoaxial und biaxial gereckte Folien auf Basis von Polyolefinen werden in großen Mengen für Verpackungsklebebänder, Strapping Tapes und andere Klebebänder eingesetzt. Auch Folien auf Basis von gerecktem Polyethylen oder gereckten Copolymeren, enthaltend Ethylen- und/oder Polypropyleneinheiten, sind bekannt. All diese aufgezählten Folien lassen sich als Trägerfolie erfindungsgemäß einsetzen.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Bevorzugt zur Herstellung der erfindungsgemäßen Klebebänder zum Bündeln und Palettieren von Kartonagen und anderen Gütern sind monoaxial gereckte Folien auf Basis von Polypropylen.
Die Dicken der monoaxial gereckten Folien auf Basis von Polypropylen liegen bevorzugt zwischen 25 und 200 µm, insbesondere zwischen 40 und 130 µm.
Folien aus monoaxial gerecktem Polypropylen sind zur Herstellung der erfindungsgemäßen Klebebänder besonders geeignet. Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Bevorzugt zur Herstellung der erfindungsgemäßen Klebebänder zum sicheren Kartonverschluß sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.
Die erzielten Elastizitätsmodule in Längsrichtung, gemessen bei 10 % Dehnung nach ASTM D882, liegen üblicherweise zwischen 1000 und 4000 N/mm², vorzugsweise zwischen 1500 und 3000 N/mm².
Die Dicken der biaxial gereckten Folien auf Basis von Polypropylen liegen besonders zwischen 15 und 100 µm, vorzugsweise zwischen 20 und 50 µm.
Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Besonders bevorzugt für die erfindungsgemäßen Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Folien auf Basis von Hart-PVC sind ebenfalls bekannt und werden von verschiedenen Klebebandherstellern zur Herstellung von Verpackungsklebebändern verwendet. Weich-PVC-Folien sind ebenfalls zur Herstellung von Verpackungsklebebändern geeignet, wobei deren unzureichende Wärmebeständigkeit von max. 60 °C berücksichtigt werden muß.
Für die erfindungsgemäßen Klebebänder für einen sicheren Kartonverschluß werden vorzugsweise Folien verwendet auf Basis von Hart-PVC. Die Dicken der Folien liegen bevorzugt zwischen 30 und 100 µm, insbesondere zwischen 35 und 50 µm. Die erfindungsgemäßen Klebebänder werden als Verpackungsbänder zum Kartonverschluß verwendet.

Trennlackierungen, wie sie auf der oberen, also auf die der Klebemasse gegenüberliegenden Folienoberfläche gegebenenfalls beschichtet sind, werden in der Klebebandindustrie weit verbreitet eingesetzt. Eine Übersicht über Trennlacksysteme auf Basis von Silikon und deren Einsatz im Bereich Pressure Sensitive Adhesives findet sich in "Silicone Release coating" (D. Jones, Y. A. Peters in Handbook of Pressure Sensitive Adhesive Technology, Third Edition, edited by Donatas Satas, Van Reinhold New York. Pp. 652-683).

Durch den Einsatz von Rückseitentrennlackierungen wird ein leichtes, gleichmäßiges Abrollen der Klebebänder erzielt. Hierbei werden vor allem Trennlackierungen auf Basis von lösemittelhaltigen Carbamatsystemen und auf Basis von auf Silikon basierenden Systemen eingesetzt.
Trennlackierungen auf Basis von Silikonsystemen eignen sich als Trennlackierungen der erfindungsgemäßen Klebebänder. Bevorzugt als Trennlackierung sind UV-härtende Silikonsysteme auf 100% Basis, aber ebenso lösemittelhaltige Silikonsysteme können als Trennlackierung für die erfindungsgemäßen Klebebänder eingesetzt werden.
Die Auftragsmenge der Trennlackierung auf das Trägermaterial beträgt bevorzugt 0,1 bis 3 g/qm. In einer weiteren besonders bevorzugten Ausführung wird der Schichtauftrag der Trennlackierung von 0,2 bis 1,5 g/qm eingestellt.

Um eine sehr gute Verankerung der ersten Trennschicht des erfindungsgemäßen Klebebands auf bestimmten Bereichen auf der Folie zu erreichen, wird als erste Schicht ein Haftvermittler oder Primer eingesetzt. Hierbei wird die der Trennlackierung gegenüberliegende Folienoberfläche verwendet.

Haftvermittler auf Lösemittel- und auf wäßriger Basis werden als Haftvermittler zwischen Folie und Klebemasse oder weiteren Schichten zur Herstellung von Klebebändern verwendet. Schichten mit hoher Affinität zu Trägern beziehungsweise Haftung auf Trägern auf Basis von Thermoplastfolien werden zur Herstellung von Klebebändern eingesetzt. Die hohe Affinität zu Oberflächen von Trägem auf Basis von Thermoplastfolien bedingen die Eigenschaft derartiger Komponenten für den Einsatz als geeignete Haftvermittler. Verschiedene Primersysteme sind bekannt. Für den Einsatz als Haftvermittler für die erste Trennschicht der erfindungsgemäßen Klebebänder sind zum Beispiel wäßrige Haftvermittler auf Basis von Polyurethanen, niedrig chlorierte Polypropylene, Styrol-Butadien Copolymere und Acrylate einsetzbar. Ebenso lösemittelhaltige Haftvermittler sind für die Verankerung nachfolgender Schichten bei den erfindungsgemäßen Klebebändern geeignet. Diese Haftvermittler werden in der Klebebandindustrie als Primer verwendet.

Die Auftragsmenge der Primerschicht auf das Trägermaterial beträgt bevorzugt 0,5 bis 12 g/qm. In einer weiteren bevorzugten Ausführung wird der Schichtauftrag der ersten Haftvermittler Schicht von 1,5 bis 6 g/qm eingestellt.

In einer bevorzugten Ausführungsform des Klebebands wird die Haftung der Primerschicht auf der Thermoplastfolie auf Basis von Polyolefinen durch Coronabehandlung oder ganz besonders durch Flammenvorbehandlung verbessert, denn gerade die Oberflächen der Folien auf Basis von gereckten Polyolefinen können durch diese allgemein bekannten Verfahren, wie die Corona- oder Flammenbehandlung, behandelt werden. Bevorzugt sind Oberflächenbehandlungen durch Flammenvorbehandlung. Eine Übersicht über die Verfahren zur Oberflächenbehandlung enthält beispielsweise der Artikel "Surface pretreatment of plastics for adhesive bonding" (A. Kruse; G. Krüger, A. Baalmann and O. D. Hennemann; J. Adhesion Sci. Technol., Vol 9, No12, pp 1611-1621 (1995)).

Die Primerschicht wird nicht vollflächig auf die der Trennlackierung gegenüberliegenden Oberfläche des Trägers auf Basis von Thermoplastfolien aufgetragen. Um einen visuellen Sicherheitseffekt bei der Anwendung der erfindungsgemäßen Klebebänder zu erreichen, wird die Primerschicht in einer spezifischen nicht vollflächigen Weise auf die Folienoberfläche aufgebracht. Hierbei wird der Auftrag der Primerschicht derart gestaltet, daß spezielle Bereiche der Folienoberfläche frei bleiben und diese freien Bereiche zum Beispiel die Worte "OPENED" oder "VOID" bilden. Diese Art der Aufbringung der Primerschicht wird durch geeignete Druckverfahren ermöglicht.
Die von der nicht vollflächig aufgetragenen Primerschicht freigelassenen Bereiche auf der Folienoberfläche stellen bevorzugt charakteristische Zeichen beziehungsweise Symbole dar.

Eine erste Trennschicht wird vollflächig auf die Primerschicht beziehungsweise auf die freien Oberflächenbereiche der verwendeten Folie zur Herstellung der erfindungsgemäßen Klebebänder aufgetragen. Als Trennschicht für die erfindungsgemäßen Klebebänder eignen sich zum Beispiel Harzdispersionen, Acrylatdispersionen oder allgemein Polymerdispersionen beziehungsweise lösemittelhaltige Polymerlösungen, die eine nach der Trocknung ausreichende geringe Haftung zum Träger und eine Sprödigkeit aufweisen.

Besonders bevorzugt als Schicht für die erfindungsgemäßen Klebebänder sind geeignete Druckfarben für Träger auf Basis von Thermoplastfolien. Hierbei werden zum Beispiel wasserbasierende, lösemittelbasierende oder durch UV-Strahlung härtende Flexodruckfarben als Schicht verwendet. Derartige Farbschichten sind farbstark und geeignet mittels verschiedenster Technologie auf die erste Schicht beziehungsweise die Folie aufgebracht zu werden. Durch geeignete Wahl der Druckfarben kann das Schichtsystem der erfindungsgemäßen Klebebänder derart eingestellt werden, daß die Schicht sehr gut auf der Primerschicht verankert, andererseits, mit denen nicht mit der Primerschicht beschichteten Bereichen der Folie, eine schlechte Haftung beziehungsweise einen schlechten Verbund aufweist.

Die Auftragsmenge der ersten Trennschicht auf das Trägermaterial beziehungsweise die Primerschicht beträgt bevorzugt 2 bis 18 g/qm. In einer weiteren bevorzugten Ausführung wird der Schichtauftrag der ersten Schicht von 5 bis 11 g/qm eingestellt.

Die zweite Trenn- beziehungsweise insbesondere Farbschicht wird vollflächig bei der Herstellung der erfindungsgemäßen Klebebänder auf die erste Trennschicht aufgetragen.

Zur guten Erkennung der Öffnungssicherung durch die Verwendung der erfindungsgemäßen Klebebänder sind die erste und zweite Trenn- beziehungsweise Farbschicht bevorzugt verschiedenfarbig. Kontrastfarben erhöhen hierbei den Sicherheitseffekt bezüglich des unbemerkten Öffnens der Verpackung.

Als zweite Trennschicht für die erfindungsgemäßen Klebebänder eignen sich wäßrige oder lösemittelhaltige Druckfarben, die eine nach der Trocknung ausreichend geringe Haftung auf der ersten Trennschicht und eine ausreichende Sprödigkeit aufweisen.

Durch geeignete Abstimmung der chemischen Zusammensetzung beziehungsweise Abstimmung und Optimierung der verschiedenen Polaritäten, Sprödigkeiten und Zusammensetzungen der ersten und zweiten Trennschicht bedingt das bei den erfindungsgemäßen Klebebändern beschriebene Eigenschaftsprofil.

Bevorzugt bei der Herstellung der erfindungsgemäßen Klebebänder sind zum Beispiel wasserbasierende, lösemittelbasierende oder durch UV-Strahlung härtende Flexodruckfarben für den Einsatz als zweite Trennschicht.
Derartige Farbschichten sind farbstark und geeignet mittels verschiedenster Technologie auf die erste Trennschicht aufgebracht zu werden.

Die Auftragsmenge der zweiten Trennschicht beziehungsweise Farbschicht auf die erste Trennschicht beträgt bevorzugt 8 bis 50 g/qm. In einer weiteren bevorzugten Ausführung wird der Schichtauftrag der dritten Schicht beziehungsweise Farbschicht von 15 bis 30 g/qm eingestellt.

Als Klebemassen können im wesentlichen alle bekannten Klebemassen mit hoher Klebkraft auf dem zu verpackenden Haftgrund eingesetzt werden.

Die Klebemasse des erfindungsgemäßen Klebebandes kann aus einer Klebemasse auf Basis von lösemittelhaltigen Naturkautschuk- und Acrylatklebemassen bestehen. Bevorzugt sind Klebemassen auf Basis von Acrylatdispersionen. Diese Klebemassentechnologien werden in der Klebebandindustrie eingesetzt.

Die Auftragsmenge der Klebemasse auf das Trägermaterial beträgt bevorzugt 15 bis 60 g/qm. In einer weiteren bevorzugten Ausführung wird der Schichtauftrag von 20 bis 30 g/qm eingestellt.

Die Herstellung der erfindungsgemäßen Klebebänder erfolgt in einem mehrstufigen Prozeß. In einem ersten Schritt erfolgt die Beschichtung einer der Oberflächen des Trägers auf Basis einer Thermoplastfolie mit der auf Silikon basierenden Trennlackierung. Diese einseitige Ausrüstung des Trägers wird mit entsprechenden Beschichtungsanlagen realisiert.

Die der Trennlackierung gegenüberliegende Folienoberfläche wird gegebenenfalls corona- oder flammenvorbehandelt.

Die Primerschicht mit hoher Affinität zur Oberfläche der eingesetzten Thermoplastfolie wird mit Hilfe des Flexodrucks auf die der mit Trennlackierung gegenüberliegenden Folienoberfläche aufgebracht.

Bedruckung mittels Flexodruck wird unter anderem in der Klebebandindustrie zur Individualisierung von Klebebändern eingesetzt.
Hierbei werden Druckformen verwendet, deren erhabene Partien die erste Schicht übertragen. Die Druckformen sind flexible Platten aus Gummi oder Fotopolymeren. Flexodruckkomponenten sind dünnflüssig, sowohl lösemittel- als auch wasserbasierend. Sie sind schnell trocknend, insbesondere im Bereich der strahlungshärtenden Systeme. Bei der Herstellung der erfindungsgemäßen Klebbänder werden bevorzugt wäßrige Flexodruckkomponenten eingesetzt. Die Auswahl der Rasterwalze richtet sich nach dem verwendeten Bedruckstoff, der dazugehörenden Flexodruckkomponente.

Die Aufbringung der ersten Trennschicht auf die Primerschicht beziehungsweise an die offenen Stellen auf die Folienoberfläche wird bei der Herstellung der erfindungsgemäßen Klebebänder durch Anwendung von üblichen Methoden erreicht. Die Beschichtung wäßriger Systeme mittels Rakel beziehungsweise lösemittelhaltiger Systeme mittels Streichbalken Rasterwalzen oder Druckverfahren ist in diesem Zusammenhang zu nennen.

Die Aufbringung der zweiten Trennschicht auf die erste Trennschicht wird bei der Herstellung der erfindungsgemäßen Klebebänder ebenfalls durch Anwendung üblicher Methoden erreicht.

Für die nachfolgende Beschichtung der Klebemasse auf die Schicht sind sowohl die Streichbalken als auch die Rakeltechnologie geeignet.
Weiterhin ist das Aufbringen von Klebemasse auf Basis von Styrol-Isopren-Styrol als Schmelzhaftkleber auf die zweite Schicht mittels bekannter Technologie bei der Herstellung der erfindungsgemäßen Klebebänder möglich.

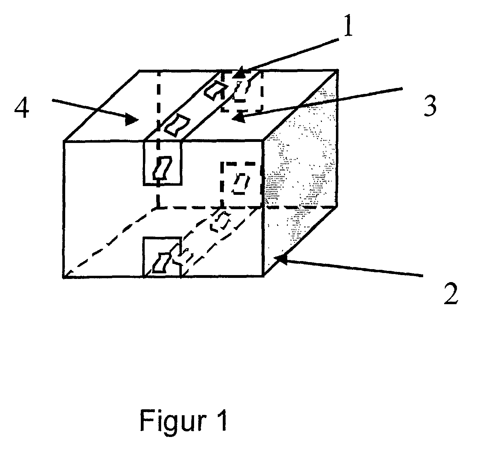

Anhand der nachfolgend beschriebenen Figuren wird eine besonders vorteilhafte Ausführung des erfindungsgemäßen Klebebands sowie die Anwendung und die Funktion näher erläutert, ohne damit die Erfindung unnötig einschränken zu wollen. Es zeigen
- Figur 1: eine dreidimensionale Darstellung eines Kartons, auf den das erfindungsgemäße Klebeband aufgeklebt ist,
- Figur 2: einen vergrößerten Ausschnitt der Darstellung in Figur 1 mit dem aufgeklebten Klebeband,
- Figur 3: eine Darstellung ähnlich Figur 2, die das erfindungsgemäße Klebeband zeigt, wenn es teilweise von der Kartonoberfläche abgelöst ist,
- Figur 4: eine Schnittzeichnung des erfindungsgemäßen Klebebandes in seiner ursprünglichen und verklebten Form, in der die Schichtdicken so dargestellt sind, daß sie optimal die Konstruktion und den Aufbau des Klebebandes erkennen lassen, und
- Figur 5: eine Schnittzeichnung ähnlich Figur 4, die jedoch die Verhältnisse der einzelnen Schichten zeigen, wenn das Klebeband erstmalig vom Karton abgezogen wird.

Die bevorzugte Ausführung der Erfindung ist als Klebeband 1 dargestellt, das zur Sicherung bzw. zum Verschluß eines Objektes wie zum Beispiel eines Kartons 2 eingesetzt wird. Der Karton 2 hat obere Deckelklappen 3, 4, die zum Verschließen des Kartons 2 herunter gefaltet werden und sich auf der Linie 6 treffen. Wie üblich ist das Klebeband 1 auf der Ober- und Unterseite des Kartons 2 über die Linie 6 verklebt und jeweils zum Niederhalten der Deckelklappen 3, 4 an den Stirnseiten des Kartons 2 herunter geklebt worden.

Um an den Inhalt des Kartons 2 zu gelangen, ohne daß der Öffnungsversuch später bemerkt wird, muß das Klebeband 1 im Bereich der Linie 6 entfernt werden, um die Deckelklappen 3, 4 hoch klappen zu können. Handelt es sich bei dem verwendeten Klebeband 1 um ein handelsübliches Klebeband, ist nach dem Entnehmen des Inhalts aus dem Karton 2 und vorsichtigem Wiederverkleben des Klebebands 1 nicht erkennbar, daß das Klebeband 1 früher schon einmal abgelöst wurde.

Das Klebeband 1 der vorliegenden Erfindung ist jedoch so konstruiert und hergestellt, daß das Öffnen und Schließen nach der beschrieben Weise nicht unbemerkt möglich ist.

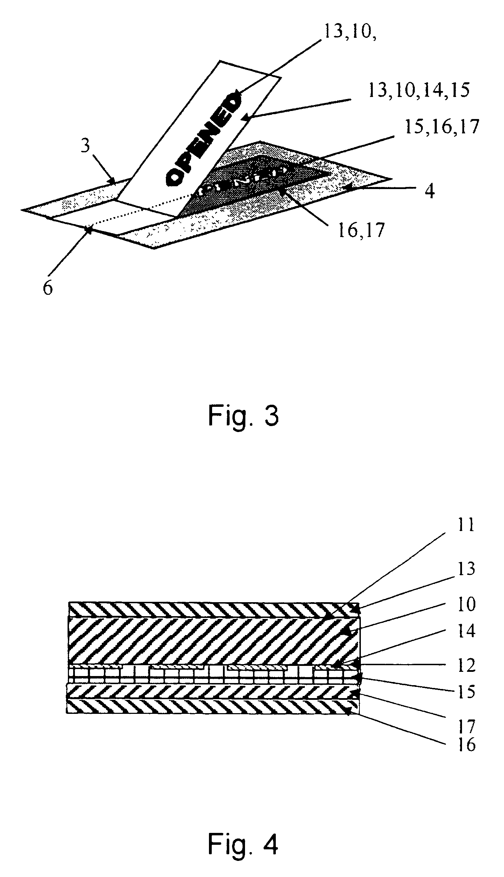

Gemäß Figur 4 besteht das Klebeband 1 aus einer vorzugsweise transparenten thermoplastischen Folie 10 mit einer ausreichenden inneren Festigkeit, die den beschriebenen Gebrauch sicherstellt.

Auf der unteren Oberfläche 12 dieser Folie 10 wird in einem ersten Arbeitsgang eine nicht vollflächige transparente Primerschicht 14 aufgebracht. Die Schicht 14 ist so auf der Folienoberfläche 12 angeordnet, daß sie einen Schriftzug ergibt, der im Falle des Ablösens des Klebebandes 1 auf der Kartonoberfläche erkennbar ist.

Im zweiten Schritt wird eine erste Trennschicht 15 auf die Primerschicht 14 und die verbleibende Folienoberfläche 12 aufgebracht. Die Trennschicht 15 besteht aus einem farbigen Material. Die farbige Trennschicht 15 ist sowohl auf der Folienoberfläche 12 zwischen dem Bereich der Primerschicht 14 als auch gerade auf der Primerschicht 14 selber aufgebracht.

In einem dritten Schritt wird auf die Trennschicht 15 eine zweite Trennschicht 17 aufgebracht. Die Trennschicht 17 hat vorzugsweise eine andere Farbe als die Trennschicht 15.

Als nächstes ist die Klebmasseschicht 16, die eine ausreichende Verklebungssicherheit auf der Kartonoberfläche sicherstellt, auf der Trennschicht 17 aufgebracht.

Die Primerschicht 14 haftet relativ sehr stark auf der Folienoberfläche 12. Die Trennschicht 15 haftet nur relativ schwach auf der Folienoberfläche 12, aber relativ stark auf der Primerschicht 14. Die Trennschicht 17 haftet nur schwach auf der Trennschicht 15.

Die Haftung der Trennschicht 15 auf der Folienoberfläche 12 ist geringer als die Haftung der Trennschicht 17 auf der Trennschicht 15. Die Klebemasseschicht 16 haftet auf der Trennschicht 17 stärker als die Trennschicht 15 auf der Folienoberfläche 12. Die Klebemasseschicht 16 haftet auf der Trennschicht 17 vorzugsweise stärker, als auf der Trennschicht 15.

Auf der Oberseite 11 des Folienträgers 10 wird eine vorzugsweise transparente Trennschicht 13 aufgebracht, die relativ stark auf der Oberfläche 11 haftet. Die Haftung der Trennschicht 13 zur Klebemasseschicht 16 ist gering, so daß das zur Rolle gewickelte Klebeband 1 abgewickelt werden kann, ohne daß eine Trennung der Trennschicht 15 von der Folienoberfläche 12 auftritt.

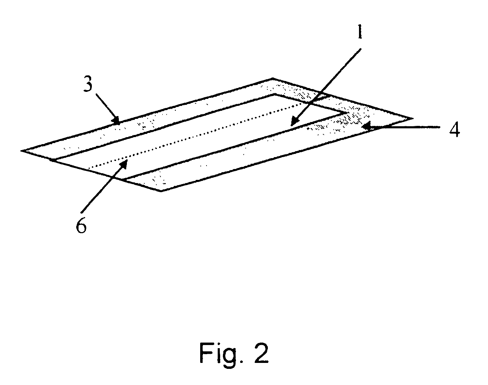

Wenn das Klebeband 1 im Aufbau gemäß Figur 4 wie in Figur 2 gezeigt auf einer Oberfläche verklebt ist, ist durch die bevorzugte Transparenz der Trennschicht 13 und des Folienträgers 10 sowie der Primerschicht 14 die gleichförmige Farbe der Farbschicht sichtbar.

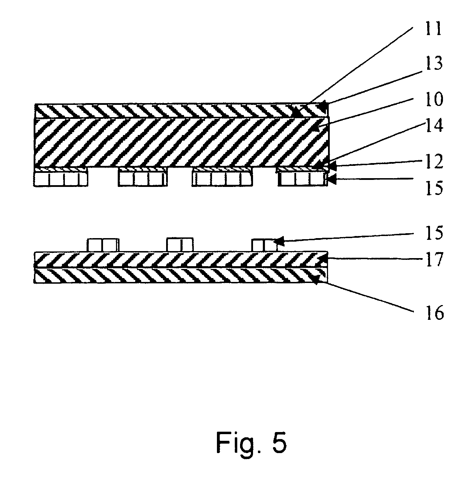

Wenn das Klebeband 1 - wie in Figur 3 gezeigt - von der Kartonoberfläche abgelöst wird, trennt sich das Klebeband 1 entsprechend Figur 5 auf. Dabei trennt sich die Trennschicht 15 in dem Bereich, in dem sie sich im direkten Kontakt zur Folienoberfläche 12 befindet von der Folie 10 ab und verbleibt auf der Kartonoberfläche 3, 4. In dem Bereich, in dem sich die Primerschicht 14 befindet, trennt sich die Trennschicht 15 von der Trennschicht 17 und verbleibt auf der Folie 10. Auf der Kartonoberfläche 3, 4 und verbleibt vollflächig die Klebmasse 16 im Verbund mit der Trennschicht 17. Auf der Trennschicht 17 verbleibt der Bereich der Trennschicht 15, der sich von der Folienoberfläche 12 abgetrennt hat. Das Wort "OPENED" ist als Schriftzug auf der Trennschicht 17 lesbar und als inverser transparenter Schriftzug auf dem Träger 10.

Beim Wiederauflegen des abgelösten Teils des Klebebandes bleibt der Schriftzug "OPENED" sichtbar, da er durch die Luftschicht an der Grenzfläche zwischen Trennschicht 15 und Trennschicht 17 eine veränderte Lichtbrechung gegenüber der Grenzflache des Verbunds Primerschicht 14 mit Trennschicht 15 und Folienoberfläche 12 einen optischen Kontrast bildet.

Weiterhin läßt sich der Schriftzug auf der Trägerfolie 10 durch den beim Applizieren und Ablösen verformten Träger 10 nicht mehr deckungsgleich in den freien Schriftzug auf der Kartonoberfläche einlegen. Ein weiterer Indikator dafür, daß das Klebeband 1 schon einmal abgelöst wurde, ist, daß die Trennung der Schichten 15, 17 irreversibel ist und daß somit die Haftung der aufeinandergelegten Schichten 15, 17 nicht ausreichend ist, um die Deckelklappen 3, 4 des Kartons 2 zu fixieren.

Das erfindungsgemäße Klebeband ist für die Anwendung als Sicherheitsverschluß zur deutlichen Erkennung eines unbefugten Öffnungsversuches beziehungsweise einer Öffnung für eine große Anzahl wertvoller beziehungsweise sensibler Güter geeignet. Ein wichtiges Anwendungsfeld ist hierbei die Sicherung verschiedenster Konsumgüter gegen Diebstahl, Verfälschung des Inhalts und der Schutz vor Raubkopien. Das unbemerkte Öffnen, Diebstahl und Verfälschung sensibler Güter wird durch die Anwendung der erfindungsgemäßen Klebebänder vermieden.
Die erfindungsgemäßen Klebebänder sind auf Grund der leichten vollflächigen inneren Trennung beim Entfernen des Klebebandes besonders für die Öffnungssicherung beziehungsweise Verpackung von leicht spaltbaren Papierverpackungen beziehungsweise die Verpackung von Kraftlinerkartons geeignet.

Die erfindungsgemäßen Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäßen Klebbänder können zur Transportsicherung von beispielsweise Kühlschränken und anderen elektrischen und elektronischen Geräten verwendet werden. Weitere Anwendungen sind Etikettenschutz. Oberflächenschutz, beispielsweise im Baubereich und Aufreißstreifen für Verpackungen. Ebenso sind Anwendungen im Bürobereich möglich.

Weiterhin sind Anwendungen bei der Verpackung von medizinischen und pharmazeutischen Produkten, die Sicherung von Verpackungen mit Kosmetika und Körperpflegeartikeln sowie von Nahrungs- und Genußmitteln als Sicherheitsverschluß möglich. Dann ist eine Anwendung zur Sicherung von elektronischen und elektrischen Geräten möglich.

Im folgenden soll die Erfindung anhand eines Beispieles erläutert werden, ohne die Erfindung unnötig einschränken zu wollen.

### Beispiel

### a: Folie a

Es wird eine biaxial gereckte, coextrudierte Folie auf Basis Polypropylen der Fa Siliconature verwendet.

| | |
|---|---|
| Foliendicke | 28 µm |
| Kennzeichnung | SILPROB B50 |
| Firma/Hersteller | Siliconature |

Die Folie wird ohne weitere Vorbehandlung eingesetzt. Die Folie besitzt eine Trennlackierung auf Basis eines lösemittelhaltigen Silikons. Auf der der Trennlackierung gegenüberliegenden Seite sind zwei Schichten aufgebracht. Die erste Schicht haftet gut auf der Trägeroberfläche. Diese Schicht ist nicht vollflächig aufgebracht und läßt die Buchstaben "OPENED" auf der Folienoberfläche frei. Über die erste Primerschicht beziehungsweise Farbschicht ist vollflächig eine zweite Schicht aufgetragen. Diese verankert schlecht auf der Folienoberfläche, gut jedoch auf der ersten nicht vollflächig aufgetragenen Primerschicht. Die erste Primerschicht ist farblos, die vollflächige Schicht ist weiß.

### b: Verwendete Klebemasse, Schicht und Trennlackierung

### b1: Trennlackierung

Es wird eine erste Primerschicht auf Basis eines Standard 100 % Silikonsystems (UVhärtend) zur Herstellung der erfindungsgemäßen Klebebänder verwendet.

### b2: Dritte Schicht

Es wird eine Schicht auf Basis einer lösemittelhaltigen Druckfarbe zur Herstellung der erfindungsgemäßen Klebebänder verwendet.
Bezeichnung: 15PAA Druckfarbe der Michael Huber München GmbH, Germany

### b3: Klebemasse:

Es wird eine Klebemasse auf Basis einer wäßrigen Acrylatdispersion zur Herstellung der erfindungsgemäßen Klebebänder verwendet.
Bezeichnung: Primal PS83D der Fa. Rhom&Haas, Germany

### c: Herstellung der Klebebänder

### c1: Beschichtung der dritten Schicht

Die Beschichtung der Folie a mit der Schicht b2 erfolgt durch einen Drahtrakel. Das Drahtrakel und die Beschichtungsgeschwindigkeit werden so eingestellt, daß nach der Trocknung der beschichteten Folie ein Masseauftrag der Schicht b2 von ca. 18 bis 20 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wird ohne Lagerung sofort weiter verwendet.
Die Oberfläche der Farbschicht b2 wird vor der Beschichtung mit Klebemasse Corona behandelt. Die Oberflächenenergie beträgt 40 bis 42 mN/m

### c2: Beschichtung der Klebemasse

Die Beschichtung der Folie c1 mit der Klebemasse erfolgt durch einen Drahtrakel. Das Drahtrakel und die Beschichtungsgeschwindigkeit werden so eingestellt, daß nach der Trocknung der beschichteten Folie ein Masseauftrag von ca. 25 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wurde in einer Breite von 19 mrn konfektioniert. Die Bestimmung des Sicherheitseffekts erfolgte nach zweitägiger Lagerung bei 23 °C.

### f: Ergebnisse

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfernt und die nun klebemassefreie Folie erneut gewogen. Aus der Differenz wird der Masseauftrag in g/m² berechnet.

Zur Bestimmung des Sicherheitseffekts wurden die gemäß Beispiel hergestellten Klebebänder untersucht. Zur Charakterisierung des Sicherheitseffekts auf Kartonoberflächen wurden Klebstreifen der Klebebänder auf Kartonagen verklebt und mittels einer 2 kg schweren Stahlrolle angedrückt (zweimaliges Überrollen). Danach wurde sofort und nach einer Wartezeit von 24 Stunden bei 23 °C manuell der Klebestreifen abgezogen.

| Verklebung auf | Kraftliner Karton | Recyceltem Karton (Testliner Karton) |
|---|---|---|
| Kartonoberfläche | gut | kritisch |
| Buchstabenübertrag | Sehr gut | Sehr gut |
| Deutlicher Sicherheitseffekt | ja | ja |
| Unbemerktes Öffnen des Kartons | Nicht möglich | Nicht möglich |
| Verpackungssicherheit | Sehr gut | Sehr gut |
| Faserausriß | nein | nein |

## Patentansprüche

1. Mehrschichtiges Klebeband mit einem Träger auf Basis einer gereckten Thermoplastfolie, dessen obere Seite gegebenenfalls mit einer Trennlackierung beschichtet ist und auf dessen untere Seite folgende Schichten aufgebracht sind:
a) eine nicht vollflächig aufgetragene Primerschicht, wobei die Primerschicht sehr gut auf der Thermoplastfolie verankert,
b) eine erste vollflächig über die aufgetragene Primerschicht und die freie Thermoplastfolienoberfläche aufgetragene Trennschicht, wobei die erste Trennschicht besser auf der Primerschicht verankert als auf der Thermoplastfolie,
c) eine zweite vollflächig auf die erste Trennschicht aufgetragene Trennschicht, wobei die zweite Trennschicht besser auf der ersten Trennschicht haftet als die erste Trennschicht auf der Folienoberfläche und wobei die zweite Trennschicht schlechter auf der ersten Trennschicht haftet als Klebemasse auf dem Haftgrund,
d) eine vollflächig auf die zweite Trennschicht aufgetragene Haftklebemasse, die auf der zweiten Trennschicht besser verankert ist als die zweite Trennschicht auf der ersten Trennschicht.

2. Klebeband nach Anspruch 1, **dadurch gekennzeichnet, daß** die Thermoplastfolie aus gerecktem Polyolefinen oder aus Polyester besteht und insbesondere transparent ist.

3. Klebeband nach Anspruch 1, **dadurch gekennzeichnet, daß** die Thermoplastfolie aus gerecktem HDPE, aus PVC, aus PET, aus monoaxial gerecktem Polypropylen oder aus biaxial gerecktem Polypropylen besteht.

4. Klebeband nach zumindest einem der vorhergehenden Ansprüche, **dadurch gekennzeichnet, daß** die Haftung der Primerschicht auf der Thermoplastfolie und weiterer Schichten untereinander durch Coronabehandlung oder Flammenbehandlung verbessert wird.

5. Klebeband nach zumindest einem der vorhergehenden Ansprüche, **dadurch gekennzeichnet, daß** die von der nicht vollflächig aufgetragenen Primerschicht freigelassenen Bereiche auf der Folienoberfläche charakteristische Zeichen beziehungsweise Symbole darstellen.

6. Klebeband nach zumindest einem der vorhergehenden Ansprüche, **dadurch gekennzeichnet, daß** die erste Trennschicht Harzdispersionen, Acrylatdispersionen, Polymerdispersionen oder insbesondere wasserbasierende, lösemittelbasierende oder durch UV-Strahlung härtende Flexodruckfarben umfaßt.

7. Klebeband nach zumindest einem der vorhergehenden Ansprüche, **dadurch gekennzeichnet, daß** die zweite Trennschicht wasserbasierende, lösemittelbasierende oder durch UV-Strahlung härtende Flexodruckfarben umfaßt.

8. Klebeband nach zumindest einem der vorhergehenden Ansprüche, **dadurch gekennzeichnet, daß** die erste Trennschicht und die zweite Trennschicht verschiedenfarbig sind.

9. Klebeband nach zumindest einem der vorhergehenden Ansprüche, **dadurch gekennzeichnet, daß** die Klebemasse eine solche auf Basis einer wäßrigen Acrylatdispersion ist.

10. Klebeband nach zumindest einem der vorhergehenden Ansprüche, **dadurch gekennzeichnet, daß** das Klebeband durch Bedruckung mit Standardfarben in einer bevorzugten Version auf der Klebmassenseite individualisiert ist.

11. Klebeband nach zumindest einem der vorhergehenden Ansprüche, **dadurch gekennzeichnet, daß** die Auftragsmenge der Primerschicht auf dem Trägermaterial 0,5 bis 12 g/qm, besonders bevorzugt 1,5 bis 6 g/qm beträgt,
die Auftragsmenge der ersten Trennschicht auf dem Trägermaterial beziehungsweise auf der Primerschicht 2 bis 18 g/qm, besonders bevorzugt 5 bis 11 g/qm, beträgt und
die Auftragsmenge der zweiten Trennschicht auf der ersten Trennschicht 8 bis 50 g/qm, besonders bevorzugt 15 bis 30 g/qm, beträgt.

12. Verwendung des Klebebandes nach zumindest einem der vorhergehenden Ansprüche als Verpackungsklebeband mit gutem Kartonverschluß und mit gutem Anfaßvermögen zu Papier, insbesondere recyceltem Papier, mit ausreichender Kohäsion, mit guter Verpackungssicherheit und mit leichtem Abrollen.

## Revendications

1. Bande adhésive à plusieurs couches présentant un support à base d'une feuille thermoplastique étirée, dont la face supérieure est le cas échéant recouverte d'un laquage de séparation et sur la face inférieure de laquelle on a appliqué les couches suivantes :
a) une couche de fond qui n'est pas appliquée sur toute la surface, la couche de fond s'ancrant très bien sur la feuille thermoplastique,
b) une première couche de séparation appliquée sur toute la surface de la couche de fond appliquée et la surface libre de la feuille thermoplastique, la première couche de séparation s'ancrant mieux sur la couche de fond que sur la feuille thermoplastique,
c) une deuxième couche de séparation appliquée sur toute la surface de la première couche de séparation, la deuxième couche de séparation adhérant mieux à la première couche de séparation que la première couche de séparation à la surface de la feuille et la deuxième couche de séparation adhérant moins bien à la première couche de séparation que la masse adhésive au substrat d'adhérence,
d) une masse autoadhésive appliquée sur toute la surface de la deuxième couche de séparation, qui est mieux ancrée sur la deuxième couche de séparation que la deuxième couche de séparation sur la première couche de séparation.

2. Bande adhésive selon la revendication 1, **caractérisée en ce que** la feuille thermoplastique est constituée de polyoléfines étirées ou de polyester et est en particulier transparente.

3. Bande adhésive selon la revendication 1, **caractérisée en ce que** la feuille thermoplastique est en HDPE étiré, PVC, PET, polypropylène étiré monoaxialement ou polypropylène étiré biaxialement.

4. Bande adhésive selon au moins l'une quelconque des revendications précédentes, **caractérisée en ce que** l'adhérence de la couche de fond sur la feuille thermoplastique et des autres couches les unes aux autres est améliorée par un traitement au corona ou un traitement à la flamme.

5. Bande adhésive selon au moins l'une quelconque des revendications précédentes, **caractérisée en ce que** les zones laissées libres par la couche de fond qui n'est pas appliquée sur toute la surface représentent des signes ou, selon le cas, des symboles caractéristiques.

6. Bande adhésive selon au moins l'une quelconque des revendications précédentes, **caractérisée en ce que** la première couche de séparation comprend des dispersions de résines, des dispersions d'acrylate ou des dispersions de polymères ou en particulier des encres de flexographie à base d'eau, à base de solvants ou durcissant au rayonnement UV.

7. Bande adhésive selon au moins l'une quelconque des revendications précédentes, **caractérisée en ce que** la deuxième couche de séparation comprend des encres de flexographie à base d'eau, à base de solvants ou durcissant au rayonnement UV.

8. Bande adhésive selon au moins l'une quelconque des revendications précédentes, **caractérisée en ce que** la première couche de séparation et la deuxième couche de séparation présentent des couleurs différentes.

9. Bande adhésive selon au moins l'une quelconque des revendications précédentes, **caractérisée en ce que** la masse adhésive est à base d'une dispersion aqueuse d'acrylate.

10. Bande adhésive selon au moins l'une quelconque des revendications précédentes, **caractérisée en ce que** la bande adhésive est individualisée par impression avec des couleurs standard dans une version préférée sur le côté de la masse adhésive.

11. Bande adhésive selon au moins l'une quelconque des revendications précédentes, **caractérisée en ce que** la quantité d'application de la couche de fond sur le matériau support est de 0,5 à 12 g/m², de manière particulièrement préférée de 1,5 à 6 g/m², la quantité d'application de la première couche de séparation sur le matériau support ou, selon le cas, la couche de fond est de 2 à 18 g/m², de manière particulièrement préférée de 5 à 11 g/m² et la quantité d'application de la deuxième couche de séparation sur la première couche de séparation est de 8 à 50 g/m², de manière particulièrement préférée de 15 à 30 g/m².

12. Utilisation de la bande adhésive selon au moins l'une quelconque des revendications précédentes comme bande adhésive d'emballage avec une bonne fermeture du carton et une bonne capacité de collage sur du papier, en particulier du papier recyclé, avec une cohésion suffisante, avec une bonne sécurisation de l'emballage et un déroulement facile.

## Claims

1. A multilayer adhesive tape having a backing based on an oriented thermoplastic film, whose upper face is coated, if desired, with a release coating and to whose lower face the following layers have been applied:
a) a primer layer which is not applied over the full area and which anchors very well to the thermoplastic film,
b) a first release layer which is applied over the full area of the applied primer layer, and the free thermoplastic film surface, the first release layer anchoring better to the primer layer than to the thermoplastic film,
c) a second release layer which is applied over the full area of the first release layer and which is anchored better on the first release layer than the first release layer on the film surface and which has worse adhesion to the first release layer than adhesive composition to the adhesion substrate,
d) a pressure-sensitive adhesive composition which is applied over the full area of the second release layer and which is anchored better on the second release layer than the second release layer on the first release layer.

2. The adhesive tape as claimed in claim 1, wherein the thermoplastic film comprises oriented polyolefins or polyester and in particular is transparent.

3. The adhesive tape as claimed in claim 1, wherein the thermoplastic film comprises oriented HDPE, or PVC, or PET, or monoaxially oriented polypropylene or biaxially oriented polypropylene.

4. The adhesive tape as claimed in at least one of the preceding claims, wherein the adhesive of the primer layer to the thermoplastic film and of further layers to one another is improved by means of corona treatment or flame treatment.

5. The adhesive tape as claimed in at least one of the preceding claims, wherein the regions on the film surface which are left open by the non-full-area application of the primer layer constitute characteristic signs or symbols.

6. The adhesive tape as claimed in at least one of the preceding claims, wherein the first release layer comprises resin dispersions, acrylate dispersions, polymer dispersions or, in particular, water-based, solvent-based or UV-curing flexographic printing inks.

7. The adhesive tape as claimed in at least one of the preceding claims, wherein the second release layer comprises water-based, solvent-based or UV-curing flexographic printing inks.

8. The adhesive tape as claimed in at least one of the preceding claims, wherein the first release layer and the second release layer are differently colored.

9. The adhesive tape as claimed in at least one of the preceding claims, wherein the adhesive composition is based on an aqueous acrylate dispersion.

10. The adhesive tape as claimed in at least one of the preceding claims, wherein the adhesive tape is individualized by printing with standard inks in a preferred version on the adhesive composition side.

11. The adhesive tape as claimed in at least one of the preceding claims, wherein the application rate of the primer layer to the backing material is from 0.5 to 12 g/m², with particular preference from 1.5 to 6 g/m²,
the application rate of the first release layer to the support material or the primer layer, respectively, is from 2 to 18 g/m², with particular preference from 5 to 11 g/m², and
the application rate of the second release layer to the first release layer is from 2 to 18 g/m², with particular preference from 5 to 11 g/m².

12. The use of the adhesive tape as claimed in at least one of the preceding claims as an adhesive packaging tape providing effective carton sealing and with good adhesion to paper, especially recycled paper, with sufficient cohesion, with good packaging security, and with easy unwind.
